# EUROPÄISCHE PATENTSCHRIFT

(11) **EP 3 321 452 B1**
(45) Veröffentlichungstag und Bekanntmachung des Hinweises auf die Patenterteilung: **29.04.2020**
(21) Anmeldenummer: 16002399.0
(22) Anmeldetag: 14.11.2016
(51) Int. Cl.: E04H 12/04, E04H 12/34, F03D 13/20, B27M 3/00

(54) **TURM AUS HOLZ**
TOWER MADE OF WOOD
TOUR EN BOIS

(43) Veröffentlichungstag der Anmeldung: 16.05.2018
(73) Patentinhaber: Züblin Timber GmbH, 86551 Aichach (DE)
(72) Erfinder: Kreutmayr, Roman, 86453 Dasing (DE); Hölzl, Franz, 86672 Thierhaupten (DE); Kunz, Fritz, 86572 Obergriesbach (DE); Ampenberger, Georg, 86551 Aichach (DE)
(74) Vertreter: Reinhardt, Annette

(56) Entgegenhaltungen:
- EP-A1- 0 054 802
- EP-A1- 3 056 636
- US-A- 3 355 196

## Beschreibung

Die Erfindung betrifft einen Turm aus Holz, der mindestens zwei Holzbauteile umfasst, die an ihren Stirnseiten miteinander verbunden sind.

Aus der EP 3 056 636 A1 ist ein Bauelement aus Holz, nämlich ein Turm für eine Windkraftanlage bekannt. Derartige Türme für Windkraftanlagen sind aus Holzbauteilen, nämlich Holzplatten aufgebaut, die zu ringförmigen Segmenten zusammengesetzt sind. Die Segmente werden dann übereinandergesetzt und miteinander verbunden. Die Bauelemente sind über Klebstoff miteinander verbunden.

Aus der US 3,355,196 und der EP 0 054 802 A1 gehen Bauelemente aus Holz hervor, die aus miteinander verbundenen Holzbauteilen aufgebaut sind, an deren Stirnseiten ineinandergreifende Verzahnungselemente angeordnet sind. Die Verzahnungselemente sind von Längsnuten unterbrochen, die einen Aufnahmeraum für einen Keil bzw. eine Auflagerplatte bilden. Der Keil bzw. die Auflagerplatte füllen die Nuten im Bereich der Verzahnungselemente vollständig aus.

Der Erfindung liegt die Aufgabe zugrunde, einen Turm aus Holz zu schaffen, dessen Holzbauteile sicher über eine Klebverbindung miteinander verbunden werden können.

Diese Aufgabe wird durch einen Turm aus Holz mit den Merkmalen des Anspruchs 1 gelöst.

Um eine große Länge der Klebfläche zu erreichen, ist für einen Turm nach Anspruch 1 vorgesehen, dass die Holzbauteile an ihren Stirnseiten jeweils eine Verzahnungsstruktur aufweisen, die mehrere Verzahnungselemente umfasst. Die Verzahnungselemente der beiden Holzbauteile greifen ineinander und begrenzen zwischen sich einen Spalt. Um eine gute Verteilung des Klebstoffs in dem Spalt zu erreichen, ist vorgesehen, dass die Holzbauteile an ihren Stirnseiten jeweils eine Längsnut besitzen, die zwischen den Außenseiten der Holzbauteile des Turms verläuft, wobei die Längsnuten der beiden Holzbauteile einen Kanal bilden, der durch mehrere ineinander greifende Verzahnungselemente verläuft und der sich über mindestens 80% der Höhe der Verzahnungselemente erstreckt. Über den Kanal kann auf einfache Weise eine Verteilung von Klebstoff in den zwischen den Verzahnungselementen gebildeten Spalt erfolgen. Der Klebstoff muss nicht ausschließlich in Längsrichtung des Spalts zwischen den Verzahnungselementen hindurchgedrückt werden, sondern kann in Längsrichtung der Stirnseiten durch den Kanal gedrückt werden, der die Verzahnungselemente und damit auch den zwischen den Verzahnungselementen gebildeten Spalt schneidet, und aus dem Kanal in den Spalt übertreten. Dadurch kann auf einfache Weise eine gleichmäßige Verteilung des Klebstoffs über die Länge des Spalts erreicht werden. Die Anzahl der Stellen, an denen eine Pressvorrichtung zur Einbringung des Klebstoffs angesetzt werden muss, kann vergleichsweise gering gehalten werden.

Die Stirnseite des Holzbauteils verläuft vorteilhaft zwischen einer ersten Außenseite und einer zweiten Außenseite des Holzbauteils. Die Stirnseite ist vorteilhaft eine Schmalseite des Holzbauteils, während die Außenseiten vorteilhaft die Seiten des Holzbauteils mit der größten Fläche sind.

In bevorzugter Gestaltung erstreckt sich der Kanal mindestens über die gesamte Höhe der Verzahnungselemente. Dadurch kann Klebstoff aus dem Kanal über die gesamte Länge des Spalts unmittelbar in den Spalt eingepresst werden.

Vorteilhaft erstreckt sich der Kanal durch mindestens zwei, insbesondere durch mindestens fünf, bevorzugt durch mindestens zehn Verzahnungselemente jedes Holzbauteils. Dadurch, dass sich der Kanal durch mindestens zwei Verzahnungselemente erstreckt, kann über den Kanal Klebstoff in den Spalt an den mindestens zwei Verzahnungselementen eingebracht werden. Der Abstand zwischen Zuführstellen zur Zufuhr von Klebstoff in den Spalt kann dadurch geringer gehalten werden. Die Länge des Kanals beträgt vorteilhaft 10 cm bis 150 cm, vorteilhaft 30 cm bis 150 cm, insbesondere 50 cm bis 100 cm. Es hat sich gezeigt, dass über diese Kanallängen eine gute Verteilung des Klebstoffs durch den Kanal in den Spalt zwischen den Verzahnungselementen gewährleistet werden kann. Die Breite des Kanals beträgt vorteilhaft 2 mm bis 15 mm, insbesondere 3 mm bis 10 mm. Besonders bevorzugt beträgt die Breite des Kanals das 0,1 fache bis 10fache, insbesondere das 0,2fache bis 5fache der Breite des Spalts zwischen den Holzbauteilen. In bevorzugter Gestaltung beträgt die Breite des Kanals das 0,7fache bis 3,5fache der Breite des Spalts.

Zur Zufuhr von Klebstoff in den Spalt besitzt der Turm vorteilhaft mindestens einen Zuführkanal, der zu einer Außenseite eines Holzbauteils öffnet. Dadurch kann auf einfache Weise die Zufuhr von Klebstoff von der Außenseite eines Holzbauteils erfolgen. Im Turm verläuft der Zuführkanal vorteilhaft von der Außenseite zu dem Spalt mindestens teilweise schräg nach oben. Klebstoff wird demnach im Turm von unten nach oben in den Spalt gepresst. In bevorzugter Gestaltung besitzt der Turm mindestens zwei Kanäle, die in einem Abstand zueinander zwischen den Außenseiten verlaufen, und der Zuführkanal mündet zwischen den Kanälen in den Spalt. Um sicherzustellen, dass in dem Spalt keine Luft eingeschlossen ist, ist vorgesehen, dass der Turm mindestens einen Entlüftungskanal besitzt, der den Spalt mit einer Außenseite der Holzbauteile verbindet. Der Entlüftungskanal beginnt dabei vorteilhaft an einer Längsnut. Bevorzugt verläuft der Entlüftungskanal vom Spalt zu der Außenseite mindestens teilweise schräg nach oben. In bevorzugter Gestaltung münden der Entlüftungskanal und der mindestens eine Zuführkanal auf der gleichen Außenseite, insbesondere auf einer einen Innenraum des Turms begrenzenden Außenseite. Über den Entlüftungskanal kann bei geeigneter Anordnung von Zuführkanal und Entlüftungskanal auf einfache Weise geprüft werden, ob der Spalt vollständig mit Klebstoff gefüllt ist. Da die Klebstoffzufuhr über den Zuführkanal von unten erfolgt und der Entlüftungskanal nach oben verläuft, kann der Spalt über den Kanal weitgehend gleichmäßig von unten nach oben befüllt werden.

Vorteilhaft besitzen die beiden Holzbauteile mindestens zwei Verbindungsbereiche, an denen sie an ihren Stirnseiten miteinander verbunden sind. Der mindestens eine Kanal eines ersten Verbindungsbereichs ist zu dem mindestens einen Kanal des zweiten Verbindungsbereichs vorteilhaft abgedichtet, und jeder Verbindungsbereich besitzt mindestens einen Zuführkanal und mindestens eine Entlüftungsöffnung. Dadurch kann der Spalt auf einfache Weise vom Kanal des jeweiligen Verbindungsbereichs aus mit Klebstoff ausgepresst werden. Durch die Abdichtung kann ein vollständiges Befüllen des Spalts eines Verbindungsbereichs sichergestellt werden. Bevorzugt besitzt jeder Verbindungsbereich eine mittige Zuführöffnung sowie zwei benachbart zu Abdichtungen des Verbindungsbereichs angeordnete Entlüftungsöffnungen.

Die Holzbauteile sind vorteilhaft im Wesentlichen plattenförmig ausgebildet. Vorteilhaft ist das erste Holzbauteil unterhalb des zweiten Holzbauteils angeordnet. Die Stirnseiten, an denen die beiden Holzbauteile miteinander verbunden sind, verlaufen mit ihren Längsrichtungen vorteilhaft horizontal. Die Verzahnungselemente erheben sich demnach von einer gedachten horizontalen Fläche. Auch eine Neigung der gedachten Fläche zur Horizontalen kann jedoch vorteilhaft sein.

Vorteilhaft ragt die Längsnut in dem zweiten Holzbauteil mindestens 3 mm, insbesondere mindestens 5 mm nach oben über die Verzahnungselemente hinaus in das zweite Holzbauteil. Dadurch kann Klebstoff in dem Kanal auch in den Bereich oberhalb der Verzahnungselemente gepresst werden. Dieser Klebstoff kann bei einem Zusammensacken des Klebstoffs im Spalt in den Spalt nachsacken, so dass Hohlräume in dem Spalt auf einfache Weise vermieden sind.

Der Turm ist aus ringförmigen, aus mehreren Holzbauteilen aufgebauten, übereinander angeordneten Segmenten aufgebaut. Das erste Holzbauteil und das zweite Holzbauteil sind Holzbauteile übereinander liegender Segmente. Die Holzbauteile eines Segments sind vorteilhaft jeweils an einem Eckstoß miteinander verbunden. In bevorzugter Gestaltung ist der Turm ein achteckiger Turm. Auch eine andere Anzahl von Ecken des Turms kann jedoch vorteilhaft sein.

Türme für Windkraftanlagen werden aufgrund der Baugröße üblicherweise an dem Ort, an dem der Turm zu errichten ist, aus einzelnen Holzbauteilen, insbesondere Holzplatten, zusammengebaut. Um eine Klebverbindung am Eckstoß herstellen zu können, müssen gewisse Mindesttemperaturen eingehalten werden. Um nun auch bei niedrigen Umgebungstemperaturen die Erstellung eines Turms zu ermöglichen, ist vorteilhaft vorgesehen, dass die Holzbauteile an den vertikal verlaufenden, den Eckstoß bildenden Stirnseiten mindestens einen Schlitz aufweisen, in dem ein Heizelement angeordnet ist. Der Eckstoß kann dabei unmittelbar zwischen den Stirnseiten gebildet sein. In bevorzugter Gestaltung ist zwischen den Stirnseiten, die am Eckstoß angeordnet sind, jedoch ein Keil eingesetzt, der jeweils mit einer Stirnseite eines Holzbauteils verklebt ist. Vorteilhaft ist an beiden den Eckstoß bildenden Stirnseiten mindestens ein Schlitz, bevorzugt mehrere Schlitze, mit mindestens einem Heizelement angeordnet. Dadurch kann die Klebstelle am Eckstoß auf eine gewünschte Temperatur aufgeheizt werden, so dass auch bei niedrigen Umgebungstemperaturen ein Verkleben der Holzbauteile miteinander möglich ist. Bevorzugt ist der Schlitz zur Stirnseite hin verschlossen. Dadurch wird ein direkter Kontakt des Heizelements mit der Klebefuge vermieden. Durch den Abstand zwischen dem Heizelement und der Klebefuge kann eine gleichmäßige Erwärmung der Klebefuge erreicht werden.

In vorteilhafter Gestaltung sind die Holzbauteile am Eckstoß aufgedoppelt, insbesondere an beiden Außenseiten. Auch an den Außenseiten kann im Bereich der Aufdoppelung ein weiteres Heizelement angeordnet sein.

In vorteilhafter Gestaltung besitzen die Holzbauteile einen abgesperrten Querschnittsaufbau. Bevorzugt beträgt die Dicke der Holzbauteile mindestens 120 mm, insbesondere mindestens 150 mm.

Für ein Verfahren zur Herstellung eines Turms aus Holz, wobei der Turm mindestens zwei Holzbauteile umfasst, wobei der Turm eine erste Außenseite und eine zweite Außenseite besitzt, wobei die Holzbauteile an ihren Stirnseiten miteinander verbunden sind, wobei die Holzbauteile an ihren Stirnseiten jeweils eine Verzahnungsstruktur aufweisen, die mehrere, in Längsrichtung der Stirnseite nebeneinander angeordnete Verzahnungselemente aufweisen, wobei die Verzahnungselemente der beiden Holzplatten ineinander greifen und einen zwischen den Holzplatten gebildeten Spalt begrenzen, der mindestens teilweise mit Klebstoff gefüllt ist, ist vorgesehen, dass an den Holzplatten vor der Verklebung Justiervorrichtungen fixiert werden, an denen sich das zweite Holzbauteil gegenüber dem ersten Holzbauteil abstützt, und dass über die Justiervorrichtungen eine Einstellung der Breite des Spalts vor dem Einpressen von Klebstoff erfolgt. Über die Justiervorrichtung kann auf einfache Weise eine gleichmäßige, gewünschte Spaltbreite eingestellt werden. Dadurch wird eine sichere Klebverbindung erreicht.

Vorteilhaft werden die Justiervorrichtungen nach dem Aushärten von den Holzbauteilen demontiert. Während des Aushärtens kann über die mindestens eine Justiervorrichtung sichergestellt werden, dass die beiden Holzbauteile sich nicht relativ zueinander bewegen können.

Ein Verfahren zur Herstellung eines Turms aus Holz, insbesondere eines Turms für eine Windkraftanlage, wobei der Turm aus mehreren, übereinander angeordneten, ringförmigen Segmenten aufgebaut ist, wobei jedes Segment aus mehreren Holzbauteilen, insbesondere Holzplatten, aufgebaut ist, die miteinander verklebt sind, wobei der Turm mindestens ein unteres Segment umfasst, ist vorgesehen, dass die Holzbauteile des mindestens einen unteren Segments freistehend ohne Witterungsschutz miteinander verklebt werden, und dass der Turm mindestens ein oberes Segment besitzt, dessen Außenabmessungen kleiner als die Innenabmessungen des unteren Segments sind, und dass die Holzbauteile des mindestens einen oberen Segments innerhalb des unteren Segments miteinander verklebt werden. Dadurch wird das obere Segment vor Umwelteinflüssen geschützt verklebt.

Bei niedrigen Außentemperaturen kann das untere Segment eines Dachs dabei verschlossen und insbesondere der Innenraum des unteren Segments aufgeheizt werden, um eine gewünschte Temperatur beim Verkleben zu erreichen. Dadurch, dass das mindestens eine obere Segment innerhalb des unteren Segments hergestellt wird, kann die Herstellung einer separaten Montagehalle oder dergleichen entfallen. Nach der Einbringung des Klebstoffs wird das Dach vorteilhaft entfernt. Während der Aushärtung kann der Innenraum des unteren Segments beheizt werden.

Für einen Turm aus Holz, der mindestens zwei Holzbauteile umfasst, wobei die Holzbauteile an ihren Stirnseiten über eine Klebverbindung miteinander verbunden sind, ist vorgesehen, dass mindestens eines der Holzbauteile mindestens ein Heizelement besitzt, das in einem an der Stirnseite in Längsrichtung der Stirnseite verlaufenden Schlitz angeordnet ist.

Über das Heizelement kann das Holzbauteil an der über eine Klebverbindung mit dem anderen Holzbauteil zu verbindenden Stirnseite während des Klebvorgangs erhitzt werden. Das Heizelement kann beispielsweise ein Heizdraht sein. Vorteilhaft besitzt das Holzbauteil Längslagen und mindestens eine Querlage mit quer zur Längslage verlaufender Faserrichtung. Der Schlitz ist bevorzugt in der Querlage angeordnet. Die Faserrichtung in der Querlage verläuft vorteilhaft unter einem Winkel von 20° bis 90°, insbesondere von 20° bis 70° zur Stirnseite. Die Faserrichtung in der Längslage ist zur Stirnseite vorteilhaft um einen Winkel von 0° bis 20° geneigt. Der Winkel ist dabei jeweils zur Längsrichtung der Stirnseite gemessen. Über die Längslagen wird üblicherweise die Last abgetragen, während die mindestens eine Querlage üblicherweise zur Formstabilisierung dient. Durch die Anordnung des Heizelements in einer Querlage ergibt sich dadurch keine Schwächung des zum Lastabtrag vorhandenen Querschnitts.

Vorteilhaft sind mindestens zwei Heizelemente in der Stirnseite vorgesehen, die in zueinander benachbarten Schlitzen angeordnet sind. Der senkrecht zur Außenseite des Holzbauteils gemessene Abstand der Schlitze zueinander entspricht vorteilhaft mindestens dem 0,2fachen der Dicke des Holzbauteils.

Ausführungsbeispiele der Erfindung werden im Folgenden anhand der Zeichnung erläutert. Es zeigen:
- Fig. 1: eine schematische, perspektivische Darstellung einer Windkraftanlage,
- Fig. 2: einen schematischen Längsschnitt durch die Windkraftanlage aus Fig. 1,
- Fig. 3: den Fußbereich der Windkraftanlage aus Fig. 1 in vergrößerter Schnittdarstellung,
- Fig. 4: einen Schnitt entlang der Linie IV-IV in Fig. 3,
- Fig. 5: den Ausschnitt V aus Fig. 2 in vergrößerter Darstellung,
- Fig. 6: den Ausschnitt VI aus Fig. 2 in vergrößerter Darstellung,
- Fig. 7: eine Seitenansicht des Stoßbereichs zwischen zwei Segmenten des Turms,
- Fig. 8: einen vergrößerten Ausschnitt aus Fig. 7,
- Fig. 9: eine schematische Seitenansicht eines Ausschnitts des Stoßbereichs,
- Fig. 10: eine schematische Schnittdarstellung entlang der Linie X-X in Fig. 9,
- Fig. 11: eine schematische Schnittdarstellung entlang der Linie XI-XI in Fig. 9,
- Fig. 12: eine schematische Schnittdarstellung des Ausschnitts XII aus Fig. 4 in vergrößerter, gedrehter Darstellung,
- Fig. 13: eine schematische ausschnittsweise Darstellung des Stoßbereichs während der Verklebung,
- Fig. 14: eine schematische Schnittdarstellung entlang der Linie XIV-XIV in Fig. 13,
- Fig. 15: eine schematische Schnittdarstellung entlang der Linie XV-XV in Fig. 13.

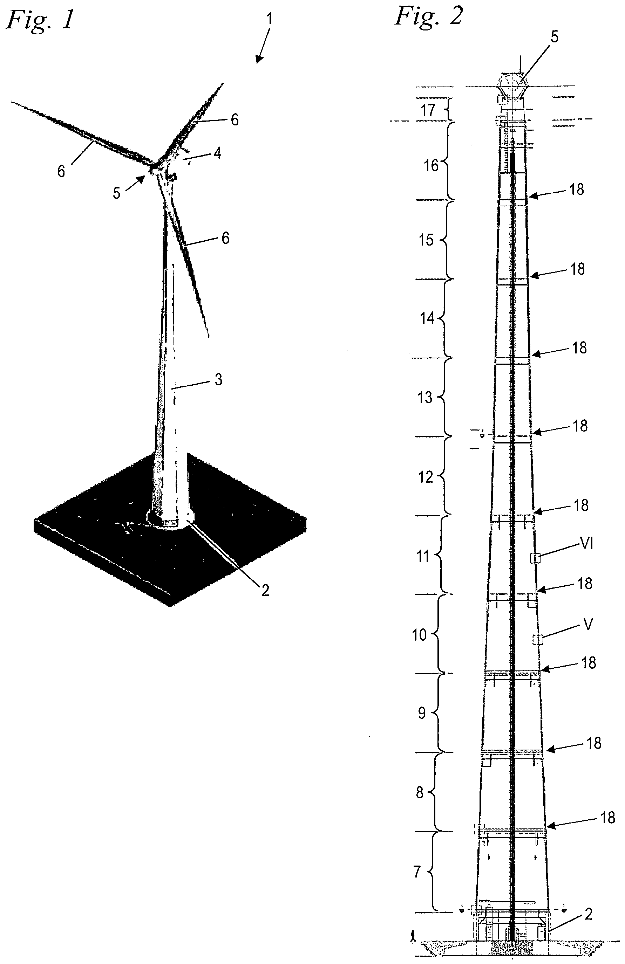

Fig. 1 zeigt eine Windkraftanlage 1. Die Windkraftanlage 1 besitzt einen Turm 3, der auf einem Sockel 2 angeordnet ist. An der Oberseite des Turms 3 ist eine Gondel 4 festgelegt, an der ein Rotor 5 um eine Drehachse drehbar gelagert ist. Der Rotor 5 umfasst im Ausführungsbeispiel drei Rotorblätter 6. Der Turm 3 ist aus Holz aufgebaut und ist ein Ausführungsbeispiel für ein erfindungsgemäßes Bauelement aus Holz. Erfindungsgemäße Bauelemente aus Holz können auch andere Bauelemente, beispielsweise Gebäude oder dergleichen sein.

Wie Fig. 2 zeigt, ist der Turm 3 aus übereinander angeordneten, ringförmigen Segmenten 7 bis 16 aufgebaut. Der Außendurchmesser des Turms 3 verringert sich dabei mit zunehmender Höhe kontinuierlich. Die Segmente 7 bis 16 besitzen eine kegelstumpfförmige Gestalt. Auf dem obersten Segment 16 ist ein Turmkopf 17 angeordnet, der die Gondel 4 mit dem Rotor 5 trägt. Übereinander liegende Segmente 7 bis 16 sind jeweils an einem horizontal verlaufenden Stoßbereich 18 miteinander verbunden. Die Segmente 7 bis 16 sind dabei vom Sockel 2 nach oben durchgehend nummeriert. Das unterste Segment 7 ist auf dem Sockel 2 angeordnet.

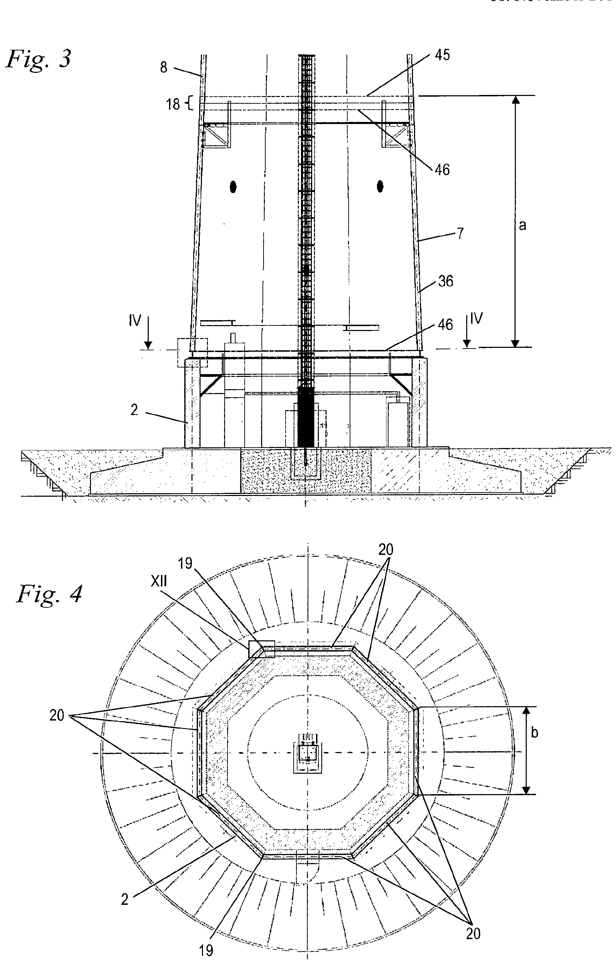

Wie Fig. 3 zeigt, besitzt das unterste Segment 7 eine untere Stirnseite 46 sowie eine obere Stirnseite 45. Das über dem Segment 7 angeordnete Segment 8 besitzt eine untere Stirnseite 46, die tiefer angeordnet ist als die obere Stirnseite 45 des unteren Segments 7. Im Stoßbereich 8 greifen die Segmente 7 und 8 ineinander ein. Die Stoßbereiche 18 zwischen den anderen Segmenten 8 bis 16 sind vorteilhaft entsprechend ausgebildet.

Wie Fig. 3 zeigt, besitzt das unterste Segment 7 eine von der unteren Stirnseite 46 zur oberen Stirnseite 45 gemessene Höhe a, die vorteilhaft mehrere Meter beträgt. Im Ausführungsbeispiel ist eine Höhe a vorgesehen, die von 5 m bis 50 m, vorteilhaft von 10 m bis 30 m, insbesondere von 10 m bis 15 m beträgt. Bevorzugt ist die Höhe a für alle Segmente gleich.

Wie Fig. 4 zeigt, ist das unterste Segment 7 aus insgesamt acht Holzbauteilen 20 aufgebaut, die an etwa vertikal verlaufenden Eckstößen 19 miteinander verbunden sind. Aufgrund der Verringerung des Außendurchmessers des Turms 3 verlaufen die Eckstöße 19 geringfügig zur Turminnenseite hin geneigt. Die Holzbauteile 20 bilden einen mehreckigen, im Ausführungsbeispiel einen achteckigen Ring. Die Holzbauteile 20 besitzen eine horizontal gemessene Breite b, die mit zunehmender Höhe stetig abnimmt. Die Breite b der Holzbauteile 20 kann mehrere Meter, beispielsweise 2 m bis 5 m betragen.

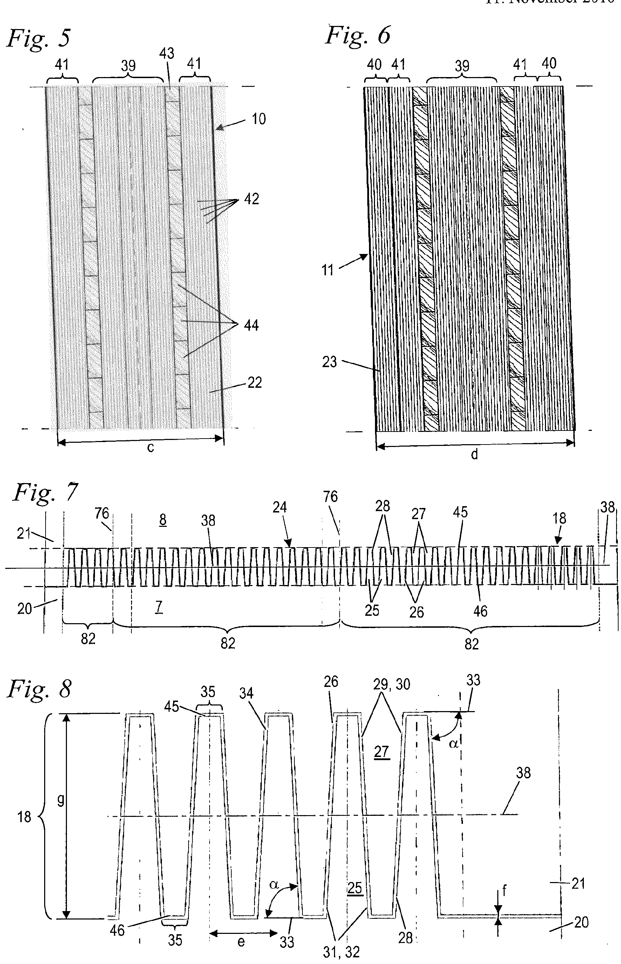

Fig. 5 zeigt einen Schnitt durch ein Holzbauteil 22 des Segments 10. Wie Fig. 5 zeigt, besitzt das Holzbauteil 22 eine horizontal gemessene Dicke c. Die Holzbauteile der darunter liegenden Segmente 7, 8 und 9, insbesondere die Holzbauteile 20 des Segments 7 und die Holzbauteile 21 des Segments 8, sind vorteilhaft entsprechend aufgebaut. Die Holzbauteile 22 besitzen einen mittleren Bereich, der durch Längslagen 39 gebildet ist. In den Längslagen 39 verläuft die Faserrichtung vorteilhaft zu einer Längsrichtung 38 (Fig. 7) der Stirnseite 45, 46 der Holzbauteile 22 um einen Winkel von 20° bis 90°, insbesondere von 20° bis 70° geneigt. Das Holzbauteil 22 besitzt außerdem außenliegende Längslagen 41. Auch in den Längslagen 41 verläuft die Faserrichtung vorteilhaft zur Längsrichtung 38 (Fig. 7) der Stirnseite 45, 46 der Holzbauteile 22 um einen Winkel von 20° bis 90°, insbesondere von 20° bis 70° geneigt. In den Längslagen 41 kann die Faserrichtung parallel zur Faserrichtung in den Längslagen 39 verlaufen. Es kann auch vorteilhaft sein, dass die Faserrichtung in den Längslagen 41 in Gegenrichtung zur Faserrichtung in den Längslagen 39 zu den Stirnseiten 45, 46 geneigt verläuft. Die Längslagen 39 und 41 sind vorteilhaft durch eine Vielzahl von Furnierschichten 42 gebildet, deren Dicke beispielsweise von 2 mm bis 5 mm betragen kann.

Zwischen den Längslagen 39 und 41 ist jeweils eine Querlage 43 angeordnet. Die Querlagen 43 sind im Ausführungsbeispiel durch Holzbretter 44 gebildet. Die Querlagen 43 können jedoch alternativ durch eine Vielzahl von Furnierlagen gebildet sein. Die Faserrichtung in der Querlage 43 verläuft vorteilhaft unter einem Winkel von bis zu 20° zur Längsrichtung 38 der Stirnseite 46, 45 (Fig. 3). Bevorzugt verläuft die Faserrichtung in der Längslage 43 parallel zur Stirnseite 46, 47.

Fig. 6 zeigt einen Schnitt durch das Segment 11. Das Segment 11 ist aus Holzbauteilen 23 aufgebaut, die eine Dicke d besitzen. Die Dicke d ist größer als die Dicke c. Vorteilhaft sind die Holzbauteile der darüber liegenden Segmente 12 bis 16 entsprechend aufgebaut. Das Holzbauteil 23 besitzt Längslagen 39 und 41 sowie Querlagen 43, die entsprechend zu den Längslagen 39, 41 und Querlagen 43 des Holzbauteils 22 aufgebaut sind. Bei dem Holzbauteil 23 sind an den Außenseiten der Längslagen 41 jeweils noch Längslagen 40 angeordnet. Die Faserrichtung in den Längslagen 40 verläuft vorteilhaft unter einem Winkel von 20° bis 90°, insbesondere von 20° bis 70° zur Längsrichtung 38 der Stirnseiten 45 und 46. Die Dicke c, d der Holzbauteile 20 bis 23 beträgt vorteilhaft mindestens 120 mm, insbesondere mindestens 150 mm.

Im Ausführungsbeispiel sind die Holzbauteile 20, 21, 22, 23 aus Brettsperrholz. Es kann jedoch auch vorgesehen sein, Holzbauteile 20, 21, 22, 23 mit anderem Aufbau, insbesondere Holzbauteile 20, 21, 22, 23 aus Brettschichtholz, vorzusehen. In vorteilhafter Gestaltung besitzen die Holzbauteile 20, 21, 22, 23 einen abgesperrten Querschnittsaufbau. Auch ein nicht abgesperrter Querschnittsaufbau kann jedoch vorteilhaft sein. Die Erfindung kann für alle Arten von Holzbauteilen unabhängig von deren Querschnittsaufbau vorteilhaft sein.

Fig. 7 zeigt eine Seitenansicht auf den Stoßbereich 18 zwischen einem Holzbauteil 20 des untersten Segments 7 und einem Holzbauteil 21 des darüber liegenden Segments 8. Die Stoßbereiche 18 zwischen den anderen Segmenten 8 bis 16 sind vorteilhaft entsprechend ausgebildet. Wie Fig. 7 zeigt, besitzt das unterste Holzbauteil 20 an seiner in Einbaulage oben liegenden Stirnseite 45 eine Vielzahl von Verzahnungselementen 25. An der unteren Stirnseite 46 des Segments 8 sind eine Vielzahl von Verzahnungselementen 27 angeordnet. Die Verzahnungselemente 25 und 27 greifen ineinander und bilden eine Verzahnungsstruktur 24. Die Stirnseiten 45 und 46 besitzen eine gemeinsame Längsrichtung 38. Im Ausführungsbeispiel liegt die Längsrichtung 38 der Stirnseiten 45 und 46 horizontal. Die Verzahnungselemente 25 und 27 liegen in Längsrichtung 38 nebeneinander. Die Verzahnungselemente 25, 27 sind als Zähne ausgebildet, die im Ausführungsbeispiel senkrecht zur Längsrichtung 38 verlaufen. An der oberen Stirnseite 45 des Verzahnungselements 7 sind zwischen den Zähnen 25 Vertiefungen 26 gebildet, in die die Verzahnungselemente 27 eingreifen. Die untere Stirnseite 46 des Holzbauteils 21 des Segments 8 besitzt Vertiefungen 28, in die die Verzahnungselemente 25 des Holzbauteils 20 eingreifen.

Fig. 8 zeigt einen Ausschnitt des Stoßbereichs 18 in vergrößerter Darstellung. Der Stoßbereich 18 besitzt eine etwa vertikal gemessene Höhe g, die vorteilhaft mindestens 5 cm, insbesondere mindestens 10 cm, bevorzugt mindestens 15 cm beträgt. Die Höhe g beträgt vorteilhaft weniger als 2 m, insbesondere weniger als 1 m. Die Vertiefungen 26 und 28 sind als keilförmige Schlitze hergestellt, die sich über die gesamte Dicke c der Holzbauteile 20, 21 erstrecken. Die Vertiefungen 26, 28 und die Verzahnungselemente 25, 27 besitzen Seitenwände 29, 30, 31, 32, die gegenüber einer Horizontalen 33 in Umfangsrichtung des Turms 3 geneigt sind. Die Längsrichtung 38 (Fig. 7) der Stirnseiten 45 und 46 ist im Ausführungsbeispiel parallel zur Horizontalen 33 ausgerichtet. Der Winkel a, um den die Seitenwände 29, 30, 31 und 32 zur Horizontalen 33 geneigt sind, beträgt vorteilhaft weniger als 90°, insbesondere 70° bis 89,5°. Besonders bevorzugt ist ein Winkel α von 80° bis 89° vorgesehen. Der Winkel α ist vorteilhaft für alle Seitenwände 29, 30, 31, 32 gleich. Zwischen den Seitenwänden 29, 30, 31, 32 ist ein Spalt 34 gebildet, der im Ausführungsbeispiel eine konstante Breite f besitzt. Die Höhe g des Stoßbereichs 18 entspricht dem Abstand der Stirnseiten 45 und 46 zuzüglich der doppelten Breite f des Spalts 34. Der Spalt 34 besitzt benachbart zu den Stirnseiten 45 und 46 jeweils einen horizontalen Abschnitt 35. Die Vertiefungen 26 und 28 sind im Ausführungsbeispiel vergleichsweise hoch und schmal ausgebildet. Das Rastermaß e der Verzahnungsstruktur 24 beträgt im Ausführungsbeispiel etwa 10 cm. Das Rastermaß e ergibt sich dabei als Abstand der Mitten benachbarter Verzahnungselemente 25 oder benachbarter Verzahnungselemente 27.

Der Spalt 34 ist vergleichsweise schmal und lang ausgebildet. Die Breite f des Spalts 34 beträgt vorteilhaft von 1 mm bis 8 mm. Der Stoßbereich 18 ist in einzelne Verbindungsbereiche 82 unterteilt, die zueinander über eine Abdichtung 76 abgedichtet sind. In Fig. 8 sind schematisch drei Verbindungsbereiche 82 eingezeichnet. Jeder Verbindungsbereich erstreckt sich vorteilhaft über mindestens zwei Verzahnungselemente 25 oder mindestens zwei Verzahnungselemente 27, insbesondere über mindestens fünf Verzahnungselemente 25 oder mindestens fünf Verzahnungselemente 27.

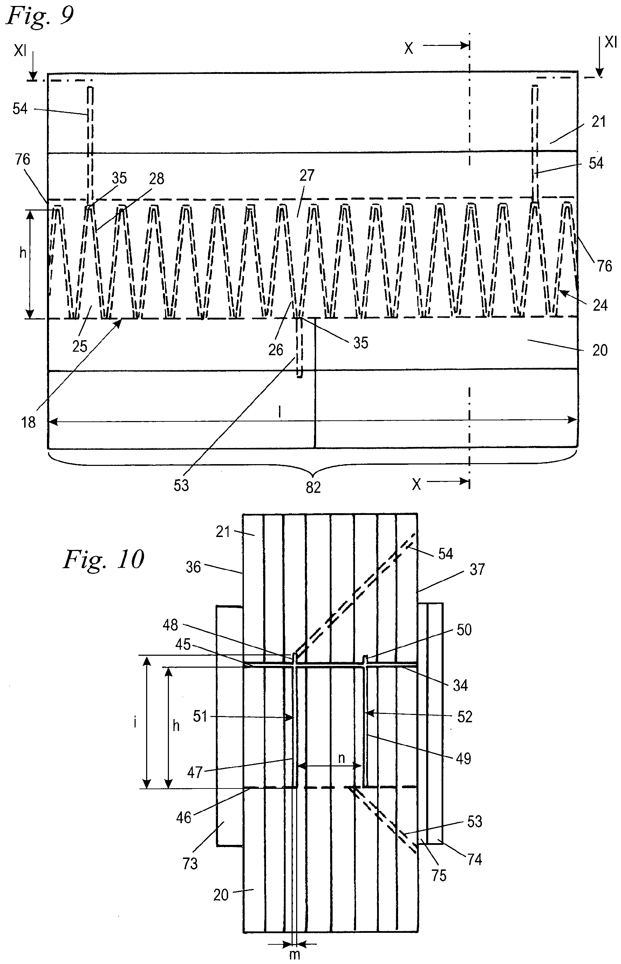

Fig. 9 zeigt einen Verbindungsbereich 82, der mehr als zehn Verzahnungselemente 25 und mehr als zehn Verzahnungselemente 27 umfasst. Die Verzahnungselemente 25 und 27 besitzen eine Höhe h. In Fig. 9 ist die Höhe h für ein Verzahnungselement 25 eingezeichnet. Die Verzahnungselemente 27 besitzen im Ausführungsbeispiel eine identische Höhe h. Zur Zufuhr von Klebstoff in den Spalt 34 sind Zuführkanäle 53 vorgesehen. Im Ausführungsbeispiel ist ein Zuführkanal 53 etwa mittig im Verbindungsbereich 82 angeordnet. Wie Fig. 9 zeigt, mündet der Zuführkanal 53 in einen horizontalen Abschnitt 35 des Spalts 34, der zwischen einer Vertiefung 26 des Holzbauteils 20 und einem Verzahnungselement 27 des Holzbauteils 21 gebildet ist. Der Zuführkanal 53 mündet damit in den Verzahnungsgrund der Verzahnungsstruktur 24. Der Durchmesser des Zuführkanals 53 kann im Bereich von etwa 0,5 mm bis 30 mm liegen. Bevorzugt ist ein Durchmesser des Zuführkanals von 5 mm bis 15 mm vorgesehen. Im Ausführungsbeispiel beträgt der Durchmesser näherungsweise 1 cm. Nahe den Enden des Abdichtungsbereiches 82 sind Entlüftungskanäle 54 vorgesehen. Dabei ist nahe jeder Abdichtung 76 ein Entlüftungskanal 54 vorgesehen.

Um den Klebstoff über die gesamte Länge 1 des Verbindungsbereichs 82 gut verteilen zu können, besitzen die Stirnseiten 45 und 46 der Holzbauteile 20 und 21 in Längsrichtung 38 (Fig. 8) verlaufende Längsnuten 47, 48, 49, 50, die in Fig. 10 gezeigt sind. Die Holzbauteile 20 und 21 besitzen Außenseiten 36 und 37, zwischen denen sich die Stirnseiten 45 und 46 erstrecken. Die Stirnseite 45 des Holzbauteils 20 besitzt zwei Längsnuten 47 und 49, die in einem Abstand n zueinander angeordnet sind. Die Stirnseite 46 des Holzbauteils 20 besitzt Längsnuten 48 und 50, die den gleichen Abstand n zueinander aufweisen. Auch die Position der Längsnuten 47 und 48 sowie die Position der Längsnuten 49 und 50 zwischen den Außenseiten 36 und 37 der Holzbauteile 20 und 21 stimmen überein, so dass die Schlitze 47 und 48 sowie die Schlitze 49 und 50 in Längsrichtung 38 in Überdeckung zueinander liegen. Die Längsnuten 47 und 49 verlaufen durch die Verzahnungselemente 25, und die Längsnuten 48 und 50 verlaufen durch die Verzahnungselemente 27.

Die Längsnuten 47 und 48 bilden einen Kanal 51. Die Längsnuten 49 und 50 bilden einen Kanal 52. Die Kanäle 51 und 52 verlaufen in Längsrichtung 38 der Stirnseiten 45 und 46 und schneiden die Verzahnungselemente 25 und 27. Dadurch kann Klebstoff über die Kanäle 51 und 52 in Längsrichtung 38 verteilt werden und seitlich in den Spalt 34 eintreten. Die Kanäle 51 und 52 besitzen eine Breite m. Im Ausführungsbeispiel besitzen beide Kanäle 51 und 52 die gleiche Breite m. Die Breite m kann beispielsweise von 2 mm bis 15 mm betragen. Die Breite m des Kanals 51, 52 beträgt vorteilhaft das 0,1fache bis 10fache, insbesondere das 0,2fache bis 5fache der Breite f (Fig. 8) des Spalts 34. Die Breite des Kanals 51, 52 beträgt bevorzugt etwa 2 mm bis etwa 15 mm, insbesondere etwa 3 mm bis etwa 10 mm. Im Ausführungsbeispiel sind etwa 0,5 cm als Breite m vorgesehen. Im Ausführungsbeispiel ist die Höhe i der Kanäle 51 und 52 größer als die Höhe g des Stoßbereichs 18. Die Längsnuten 48, 50 des Holzbauteils 21 ragen vorteilhaft mindestens 3 mm, insbesondere mindestens 5 mm nach oben über die Verzahnungselemente 27 hinaus in das zweite Holzbauteil 21. Die Kanäle 51 und 52 erstrecken sich über die gesamte Länge 1 eines Verbindungsbereichs 82. Die Länge 1 des Kanals 51, 52 beträgt vorteilhaft 10 cm bis 150 cm, insbesondere 30 cm bis 150 cm, bevorzugt 50 cm bis 100 cm.

Wie Fig. 10 auch zeigt, mündet der Zuführkanal 54 an der Außenseite 37 des Holzbauteils 20. Die Entlüftungskanäle 54 münden ebenfalls an der Außenseite 37. Die Außenseite 37 und die Außenseite 36 sind die sich gegenüberliegenden flächigen Seiten der Holzbauteile 20 und 21. Die Außenseite 36 ist die nach außen weisende Außenseite des Turms 3, während die Außenseite 37 der Holzbauteile 20 und 21 den Innenraum des Turms 3 begrenzt. Die Kanäle 51 und 52 sind ebenfalls über die Abdichtung 76 abgedichtet. Vorteilhaft erfolgt die Abdichtung der Kanäle 51 und 52 zwischen Verbindungsbereichen 82 der Holzbauteile 20 und 21 bereits werkseitig, so dass bei der Herstellung des Turms 3 aus einzelnen Holzbauteilen 20 und 21 lediglich der Spalt 34 zwischen aneinander angrenzenden Verbindungsbereichen 82 abzudichten ist. Die Abdichtung 76 zwischen den Verzahnungselementen 25, 27 und Vertiefungen 26, 28 erfolgt vorteilhaft über Kompriband, das vor der Montage des Segmentes 8 am Segment 7 montiert wird.

Der Zuführkanal 53 und der Entlüftungskanal 54 verlaufen im Ausführungsbeispiel beide näherungsweise unter einem 45°-Winkel zur Horizontalen 33 zur Außenseite 37. Der Zuführkanal 53 verläuft dabei von der Außenseite 37 in den Spalt 34 schräg nach oben. Der Zuführkanal 53 mündet zwischen den beiden Kanälen 51 und 52 in den Spalt 34. Der Entlüftungskanal 54 beginnt in einem Kanal 51 oberhalb des Spalts 34 und verläuft von dem Kanal 51 schräg nach oben zur Außenseite 37. Wie Fig. 10 auch zeigt, besitzen die Kanäle 51 und 52 eine Höhe i, die größer als die Höhe h der Verzahnungselemente 25 und 27 ist. Die Höhe i ist auch größer als die Höhe g (Fig. 8) des Stoßbereichs 18. Im Ausführungsbeispiel ragen die Kanäle 51 und 52 über die Verzahnungsstruktur 24 (Fig. 9) nach oben in das Holzbauteil 21. Dadurch kann Klebstoff beim Aushärten aus dem oberhalb der Verzahnungsstruktur 24 durch die Kanäle 51 und 52 gebildeten Klebstoffreservoir nachsacken. Der Klebstoff ist vorteilhaft ein Epoxidharz.

Jeder Kanal 51, 52 erstreckt sich vorteilhaft durch mindestens zwei, insbesondere durch mindestens fünf, bevorzugt durch mindestens zehn Verzahnungselemente 25 und 27 jedes Holzbauteils 20, 21. Im Ausführungsbeispiel erstreckt sich der Verbindungsbereich 82 über siebzehn Verzahnungselemente 25 und sechzehn Verzahnungselemente 27.

Um ein Austreten von Klebstoff an den Außenseiten 36 und 37 zu vermeiden, ist die Verzahnungsstruktur 24 an der Außenseite 36 von einer Abdeckplatte 73 abgedeckt. An der Außenseite 37, die nach innen gewandt ist, ist im Ausführungsbeispiel eine Heizplatte 74 vorgesehen, so dass auch bei geringen Außentemperaturen eine gewünschte Verarbeitungstemperatur für den Klebstoff bereitgestellt und der Turm 3 hergestellt werden kann. Zwischen den Holzbauteilen 20 und 21 und der Heizplatte 74 ist eine Plexiglasplatte 75 vorgesehen, die vorteilhaft durchsichtig ist, so dass die Füllung des Spalts 34 mit Klebstoff bei der Herstellung der Klebverbindung überwacht werden kann.

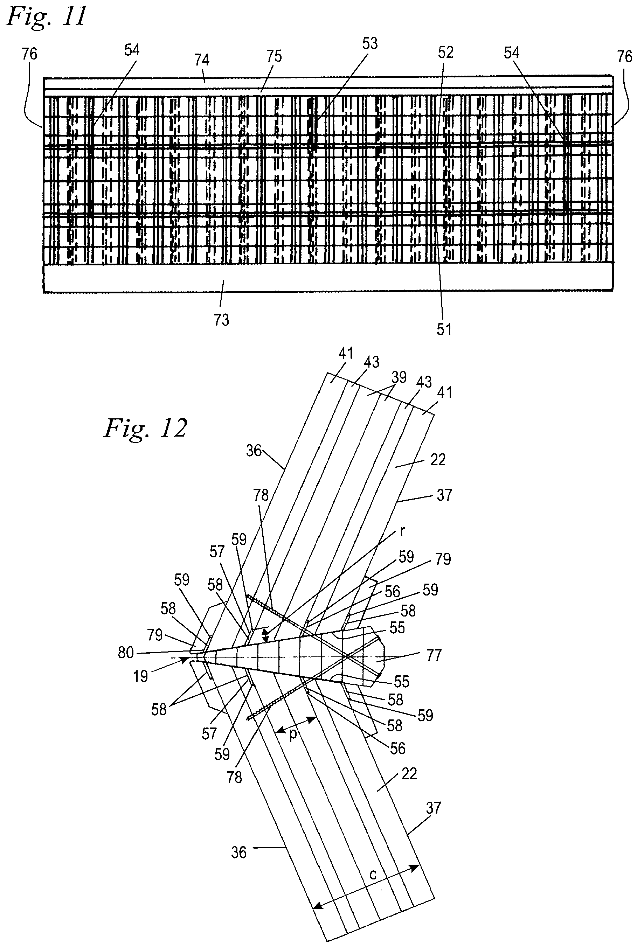

Die Anordnung der Abdeckplatte 73 sowie der Heizplatte 74 und der Plexiglasplatte 75 sind auch in Fig. 11 gezeigt.

Fig. 12 zeigt die Gestaltung eines Eckstoßes 19 im Einzelnen. Fig. 12 zeigt dabei einen Schnitt durch zwei in Umfangsrichtung benachbart zueinander angeordnete Holzbauteile 22. Im Ausführungsbeispiel sind alle Stoßbereiche 18 und alle Eckstöße 19 entsprechend zueinander ausgebildet. Die Holzbauteile 22 besitzen einander in Umfangsrichtung des Turms 3 zugewandte Stirnseiten 55. Die Stirnseiten 55 verbinden im Ausführungsbeispiel die Stirnseiten 45 und 46 der Holzbauteile 22 miteinander. Die Stirnseiten 55 verlaufen näherungsweise vertikal. Zwischen den Stirnseiten 55 ist ein Keil 77 angeordnet. Der Keil 77 erweitert sich in Richtung auf die innenliegende Außenseite 37 der Holzbauteile 22. Der Keil 77 ist von der innenliegenden Außenseite 37 eingeschoben und zwischen den Stirnseiten 55 verklebt. Insbesondere zur Sicherung während des Klebvorgangs sind Befestigungsschrauben 78 vorgesehen, über die der Keil 77 zusätzlich an den Holzbauteilen 22 fixiert ist.

Wie Fig. 12 zeigt, besitzen die Stirnseiten 55 Schlitze 56 und 57, die in den Querlagen 43 ausgebildet sind. Im Ausführungsbeispiel sind die Schlitze 59 dabei unmittelbar benachbart zur mittleren Längslage 39 in den Querlagen 43 ausgebildet. Die Schlitze 56 und 57 besitzen jeweils eine senkrecht zur Stirnseite 55 gemessene Tiefe r, die beispielsweise 1 cm bis 5 cm betragen kann. Im Ausführungsbeispiel ist eine Tiefe r von etwa 3 cm vorgesehen. Am Grund der Schlitze 56 und 57 ist jeweils ein Heizelement 59 angeordnet. Im Ausführungsbeispiel ist das Heizelement 59 ein Heizdraht. Zur Stirnseite 55 sind die Schlitze 56 und 57 über Holzleisten 58 verschlossen, so dass die Heizelemente 59 nicht mit dem Klebstoff zwischen den Holzbauteilen 22 und dem Keil 77 in Kontakt kommen. An den Außenseiten 36 und 37 ist ebenfalls jeweils ein Heizelement 59 an jedem Holzbauteil 22 angeordnet. Die Heizelemente 59 sind in Vertiefungen 80 angeordnet. Die Vertiefungen 80 sind in Aufdoppelungen 79 ausgebildet. Die Aufdoppelungen 79 sind im Ausführungsbeispiel als parallel zum Eckstoß 19 verlaufende schmale Holzbretter ausgebildet, die an den Außenseiten 36 und 37 befestigt, insbesondere verklebt sind. Die Aufdoppelungen 79 sind an der Außenseite 36 und der Außenseite 37 entsprechend ausgebildet. Dadurch sind im Ausführungsbeispiel an jeder Stirnseite 55 vier Heizelemente 59 in geringem Abstand zur Stirnseite 55 angeordnet. Es kann vorgesehen sein, dass nur an den Außenseiten 36 Aufdoppelungen 36 vorgesehen sind. Die Aufdoppelungen 79 und die an den Aufdoppelungen 79 angeordneten Heizelemente 59 können auch vollständig entfallen.

Die Heizelemente 59 in den zueinander benachbarten Schlitzen 56 und 57 besitzen einen Abstand p zueinander, der senkrecht zu den Außenseiten 36 und 37 gemessen ist. Der Abstand p zwischen benachbarten Schlitzen 56 und 57 beträgt vorteilhaft mindestens 5 cm, insbesondere 5 cm bis 15 cm. Der Abstand p der nebeneinander angeordneten Schlitze 56 und 57 zueinander entspricht vorteilhaft mindestens dem 0,2fachen der Dicke c, d des Holzbauteils 20 bis 23.

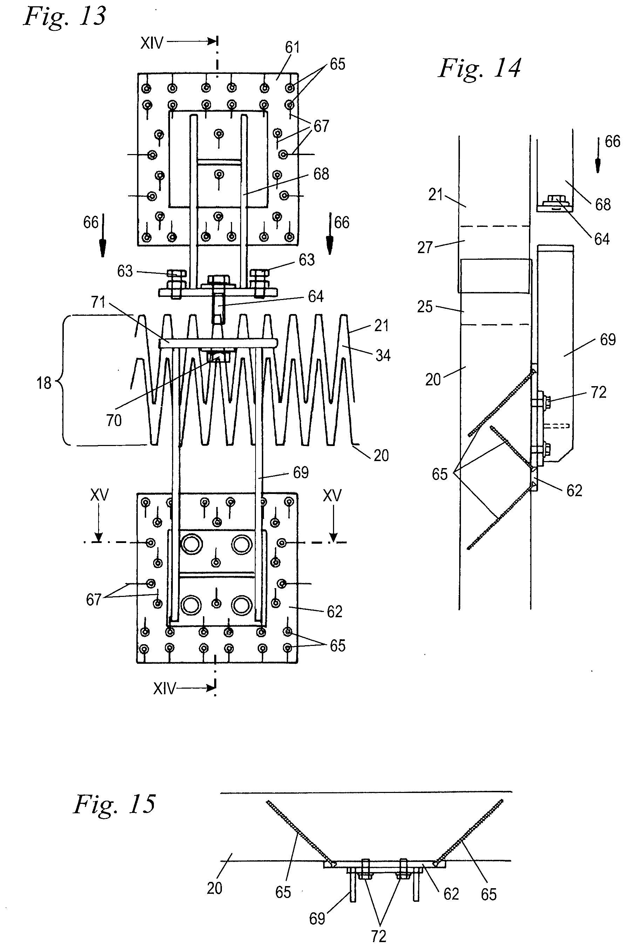

Die Fig. 13 bis 15 zeigen eine Justiervorrichtung 60 zur Justage übereinander liegender Segmente 7 bis 16 des Turms 3. Zur Herstellung des Turms 3 ist vorgesehen, dass an den Holzbauteilen 20, 21, 22, 23 übereinander liegender Segmente 7 bis 16 eine Justiervorrichtung 60 angebracht, eine gewünschte Spaltbreite des Spalts 34 eingestellt und der Klebstoff, insbesondere ein Epoxidharz, über die Zuführkanäle 53 (Fig. 10) in die Verbindungsbereiche eingepresst wird. Nach dem Aushärten des Klebstoffs ist vorgesehen, dass die Justiervorrichtungen 60 entfernt werden. Die Justiervorrichtung 60 besitzt im Ausführungsbeispiel eine obere Heizplatte 61, die an einem oben liegenden Holzbauteil 21 zu fixieren ist. Hierzu ist eine Vielzahl von Befestigungsschrauben 65 vorgesehen, die in unterschiedlichen Richtungen schräg in das Holzbauteil 21 eingeschraubt werden. Die Richtungen, in die die Befestigungsschrauben 65 einzuschrauben sind, sind in Fig. 13 schematisch über Markierungen 67 gezeigt. An der oberen Halteplatte 61 ist eine obere Halterung 68 fixiert, die im Ausführungsbeispiel zwei Justierschrauben 63 sowie eine Fixierschraube 64 besitzt.

Am unteren Holzbauteil 20 ist eine untere Halteplatte 62 über Befestigungsschrauben 65 fixiert. Auch hier sind Markierungen 67 in der Darstellung gezeigt, die die Einschraubrichtung für die Befestigungsschrauben 65 schematisch angeben. An der unteren Halteplatte 62 ist eine untere Halterung 69 fixiert, die einen im Ausführungsbeispiel horizontal verlaufenden Abstützsteg 71 besitzt. Am Abstützsteg 71 ist an der Unterseite eine Fixiermutter 70 fixiert. Zur Einstellung der gewünschten Breite des Spalts 34 wird das Segment, das die Holzbauteile 21 umfasst, in Richtung der Pfeile 66 auf das darunterliegende Segment, das die Holzbauteile 20 umfasst, abgesenkt. Die Fixierschraube 64 wird in der Fixiermutter 70 fixiert, um die horizontale Lage der Holzbauteile 20 und 21 zueinander festzulegen. Die Justierschrauben 63 werden so weit eingeschraubt, bis eine gewünschte Breite des Spalts 34 erreicht ist. Die Justierschrauben 63 stützen sich dabei jeweils mit ihrer Stirnseite auf dem Abstützsteg 71 ab und legen dadurch die Spaltbreite fest.

Fig. 14 zeigt die Anordnung in Seitenansicht. Hier sind die ineinandergreifenden Verzahnungselemente 25 und 27 sichtbar. Auch die Ausrichtung der Befestigungsschrauben 65 ist gezeigt. Wie Fig. 14 auch zeigt, ist die obere Halterung 68 an der oberen Halteplatte 61 über Befestigungsschrauben 72 fixiert. Auch eine andere Art der Fixierung kann vorteilhaft sein.

Fig. 15 zeigt die Ausrichtung von Befestigungsschrauben 65, die schräg nach außen eingeschraubt sind.

Bei der Herstellung eines Turms 3 aus übereinander angeordneten, ringförmigen Segmenten 7 bis 16, die jeweils aus mehreren Holzbauteilen 20, 21, 22, 23 aufgebaut sind, ist vorgesehen, dass die Holzbauteile 20 des unteren Segments 7 frei stehend und ohne Witterungsschutz miteinander verklebt werden. Mindestens ein darüber liegendes Segment 8 bis 16, dessen Außenabmessungen kleiner als die Innenabmessungen des unteren Segments 7 sind, wird vorteilhaft mindestens teilweise innerhalb des unteren Segments 7 hergestellt. Hierzu werden die Holzplatten 21, 22, 23 des oberen Segments 8 bis 16 innerhalb des unteren Segments 7 miteinander verklebt und die Eckstöße 19 hergestellt. Bei niedrigen Außentemperaturen kann vorgesehen sein, das untere Segment 7 vor der Verklebung des oberen Segments 8 bis 16 mit einem Dach zu verschließen. Dadurch ist das herzustellende obere Segment 8 bis 16 vor Witterungseinflüssen geschützt. Zusätzlich kann der Innenraum des unteren Segments 7 auf eine gewünschte Temperatur aufgeheizt werden, um eine gewünschte Verarbeitungstemperatur für den Klebstoff bereitzustellen. Nach der Einbringung des Klebstoffs an dem innerhalb des unteren Segments 7 angeordneten oberen Segment 8 bis 16 wird das Dach vorteilhaft wieder entfernt.

## Patentansprüche

1. Turm aus Holz, insbesondere für eine Windkraftanlage (1), wobei der Turm (3) aus ringförmigen, aus mehreren Holzbauteilen (20, 21, 22, 23) aufgebauten, übereinander angeordneten Segmenten (7, 8, 9, 10, 11, 12, 13, 14, 15, 16) aufgebaut ist, und wobei der Turm (3) mindestens zwei Holzbauteile (20, 21, 22, 23) umfasst, die Holzbauteile (20, 21) übereinanderliegender Segmente (7, 8, 9, 10, 11, 12, 13, 14, 15, 16) sind, wobei die Holzbauteile (20, 21, 22, 23) des Turms (3) eine erste Außenseite (36) und eine zweite Außenseite (37) besitzt, wobei die Holzbauteile (20, 21, 22, 23) Stirnseiten (45, 46) besitzen, an denen sie miteinander verbunden sind, wobei die Holzbauteile (20, 21, 22, 23) an ihren Stirnseiten (45, 46) jeweils eine Verzahnungsstruktur (24) aufweisen, die mehrere in Längsrichtung (38) der Stirnseite (45, 46) nebeneinander angeordnete Verzahnungselemente (25, 27) umfasst, wobei die Verzahnungselemente (25, 27) der beiden Holzbauteile (20, 21, 22, 23) ineinandergreifen und einen zwischen den Holzbauteilen (20, 21, 22, 23) gebildeten Spalt (34) begrenzen, der mindestens teilweise mit Klebstoff gefüllt ist,
**dadurch gekennzeichnet, dass** die Holzbauteile (20, 21, 22, 23) an ihren Stirnseiten (45, 46) jeweils mindestens eine Längsnut (47, 48, 49, 50) besitzen, die zwischen den Außenseiten (36, 37) der Holzbauteile (20, 21, 22, 23) des Turms (3) verläuft, wobei die Längsnuten (47, 48, 49, 50) der beiden Holzbauteile (20, 21, 22, 23) mindestens einen Kanal (51, 52) bilden, der durch mehrere ineinandergreifende Verzahnungselemente (25, 27) verläuft und der sich über mindestens 80% der Höhe (h) der Verzahnungselemente (25, 27) erstreckt.

2. Turm nach Anspruch 1,
**dadurch gekennzeichnet, dass** der Kanal (51, 52) sich mindestens über die gesamte Höhe (h) der Verzahnungselemente (25, 27) erstreckt.

3. Turm nach Anspruch 1 oder 2,
**dadurch gekennzeichnet, dass** der Kanal (51, 52) sich durch mindestens zwei, insbesondere mindestens fünf Verzahnungselemente (25, 27) jedes Holzbauteils (20, 21, 22, 23) erstreckt.

4. Turm nach einem der Ansprüche 1 bis 3,
**dadurch gekennzeichnet, dass** die Länge (1) des Kanals (51, 52) 10 cm bis 150 cm, insbesondere 50 cm bis 100 cm beträgt, und dass die Breite (m) des Kanals (51, 52) 2 mm bis 15 mm, insbesondere 3 mm bis 10 mm beträgt.

5. Turm nach einem der Ansprüche 1 bis 4,
**dadurch gekennzeichnet, dass** der Turm (3) mindestens einen Zuführkanal (53) zur Zufuhr von Klebstoff in den Spalt (34) besitzt, der zu einer Außenseite (37) eines Holzbauteils (20, 21, 22, 23) öffnet.

6. Turm nach Anspruch 5,
**dadurch gekennzeichnet, dass** der Zuführkanal (53) im Turm (3) von der Außenseite (36, 37) zum Spalt (34) mindestens teilweise schräg nach oben verläuft.

7. Turm nach einem der Ansprüche 1 bis 6,
**dadurch gekennzeichnet, dass** der Turm (3) mindestens einen Entlüftungskanal (54) besitzt, der den Spalt (34) mit einer Außenseite (36, 37) der Holzbauteile (20, 21, 22, 23) verbindet.

8. Turm nach Anspruch 7,
**dadurch gekennzeichnet, dass** der Entlüftungskanal (54) vom Spalt (34) zu der Außenseite (36, 37) mindestens teilweise schräg nach oben verläuft.

9. Turm nach einem der Ansprüche 1 bis 8,
**dadurch gekennzeichnet, dass** Holzbauteile (20, 21, 22, 23) eines Segments jeweils an einem Eckstoß (19) miteinander verbunden sind.

10. Turm nach Anspruch 9,
**dadurch gekennzeichnet, dass** die Holzbauteile (20, 21, 22, 23) an mindestens einer vertikal verlaufenden, den Eckstoß (19) bildenden Stirnseite (55) mindestens einen Schlitz (56, 57) aufweisen, in dem ein Heizelement (59) angeordnet ist.

11. Turm nach Anspruch 10,
**dadurch gekennzeichnet, dass** der Schlitz (56, 57) zur Stirnseite (55) hin verschlossen ist, insbesondere über eine Holzleiste (58).

12. Turm nach einem der Ansprüche 9 bis 11,
**dadurch gekennzeichnet, dass** die Holzbauteile (20, 21, 22, 23) am Eckstoß (19) aufgedoppelt sind, insbesondere an beiden Außenseiten (36, 37).

13. Turm nach einem der Ansprüche 1 bis 12,
**dadurch gekennzeichnet, dass** mindestens ein Holzbauteil (20, 21, 22, 23) mindestens ein Heizelement (59) besitzt, das in einem an der Stirnseite (55) in Längsrichtung der Stirnseite (55) verlaufenden Schlitz (56, 57) angeordnet ist.

14. Turm nach Anspruch 13,
**dadurch gekennzeichnet, dass** das Holzbauteil (20, 21, 22, 23) Längslagen (39, 40, 41) und mindestens eine Querlage (43) mit quer zur Längslage (39, 40, 41) verlaufender Faserrichtung besitzt und dass der Schlitz (56, 57) in der Querlage (43) angeordnet ist.

15. Turm nach Anspruch 13 oder 14,
**dadurch gekennzeichnet, dass** mindestens zwei Heizelemente (59) vorgesehen sind, die in zueinander benachbarten Schlitzen (56, 57) angeordnet sind, wobei der senkrecht zur Außenseite (36, 37) gemessene Abstand (p) der Schlitze (56, 57) zueinander mindestens dem 0,2fachen der Dicke (c, d) des Holzbauteils (20, 21, 22, 23) entspricht.

## Claims

1. Tower made of wood, in particular for a wind power plant (1), wherein the tower (3) is constructed from annular segments (7, 8, 9, 10, 11, 12, 13, 14, 15, 16) made from several wooden components (20, 21, 22, 23) and wherein the tower (3) comprises at least two wooden components (20, 21, 22, 23), the wooden components (20, 21) being segments (7, 8, 9, 10, 11, 12, 13, 14, 15, 16) placed on top of one another, wherein the wooden components (20, 21, 22, 23) of the tower (3) have a first outside (36) and a second outside (37), wherein the wooden components (20, 21, 22, 23) have end faces (45, 46), where they are joined to one another, wherein the wooden components (20, 21, 22, 23) have at their end faces (45, 46) a toothing structure (24) each, which comprises several toothing elements (25, 27) arranged adjacent to one another in the longitudinal direction (38) of the end face (45, 46), wherein the toothing elements (25, 27) of the two wooden components (20, 21, 22, 23) engage with one another and bound a gap (34) formed between the wooden components (20, 21, 22, 23) and at least partially filled with adhesive,
**characterised in that** the wooden components (20, 21, 22, 23) have at their end faces (45, 46) at least one longitudinal groove (47, 48, 49, 50) extending between the outsides (36, 37) of the wooden components (20, 21, 22, 23) of the tower (3), wherein the longitudinal grooves (47, 48, 49, 50) form at least one passage (51, 52), which runs through several mutually engaged toothing elements (25, 27) and extends over at least 80% of the height (h) of the toothing elements (25, 27).

2. Tower according to claim 1,
**characterised in that** the passage (51, 52) extends over at least the entire height (h) of the toothing elements (25, 27).

3. Tower according to claim 1 or 2,
**characterised in that** the passage (51, 52) extends through at least two, in particular at least five, toothing elements (25, 27) of each wooden component (20, 21, 22, 23).

4. Tower according to any of claims 1 to 3,
**characterised in that** the length (1) of the passage (51, 52) is 10 cm to 150 cm, in particular 50 cm to 100 cm, and **in that** the width (m) of the passage (51, 52) is 2 mm to 15 mm, in particular 3 mm to 10 mm.

5. Tower according to any of claims 1 to 4,
**characterised in that** the tower (3) has at least one feed passage (53) for feeding adhesive into the gap (34), which feed passage (53) opens towards an outside (37) of a wooden component (20, 21, 22, 23).

6. Tower according to claim 5,
**characterised in that** the feed passage (53) extends from the outside (36, 37) to the gap (34) at least partially with an upward inclination.

7. Tower according to any of claims 1 to 6,
**characterised in that** the tower (3) has at least one venting passage (54), which connects the gap (34) to an outside (36, 37) of the wooden component (20, 21, 22, 23).

8. Tower according to claim 7,
**characterised in that** the venting passage (54) extends from the gap (34) to the outside (36, 37) at least partially with an upward inclination.

9. Tower according to any of claims 1 to 8,
**characterised in that** wooden components (20, 21, 22, 23) of a segment are in each case joined to one another at a corner joint (19).

10. Tower according to claim 9,
**characterised in that** the wooden components (20, 21, 22, 23) have on at least one vertical end face (55) forming the corner joint (19) at least one slot (56, 57), in which a heating element (59) is located.

11. Tower according to claim 10,
**characterised in that** the slot (56, 57) is closed towards the end face (55) in particular by way of a strip pf wood.

12. Tower according to any of claims 9 to 11,
**characterised in that** the wooden components (20, 21, 22, 23) are sistered at the corner joint (19), in particular at both outsides (36, 37).

13. Tower according to any of claims 1 to 12,
**characterised in that** at least one of the wooden components (20, 21, 22, 23) has at least one heating element (59), which is located in a slot (56, 57) extending at the end face (55) in the longitudinal direction of the end face (55).

14. Tower according to claim 13,
**characterised in that** the wooden component (20, 21, 22, 23) has longitudinal layers (39, 40, 41) and at least one transverse layer (43) with a grain direction extending transversely to the longitudinal layer (39, 40, 41), and **in that** the slot (56, 57) is located in the transverse layer (43).

15. Tower according to claim 13 or 14,
**characterised in that** at least two heating elements (59) located in mutually adjacent slots (56, 57) are provided, wherein the spacing (p) of the slots (56, 57) as measured perpendicularly to the outside (36, 37) corresponds to at least 0.2 times the thickness (c, d) of the wooden component (20, 21, 22, 23).

## Revendications

1. Mât en bois, en particulier pour une éolienne (1), dans lequel le mât (3) est composé de segments annulaires (7, 8, 9, 10, 11, 12, 13, 14, 15, 16) superposés composés de plusieurs composants en bois (20, 21, 22, 23), et dans lequel le mât (3) comprend au moins deux composants en bois (20, 21, 22, 23) qui sont des composants en bois (20, 21) de segments (7, 8, 9, 10, 11, 12, 13, 14, 15, 16) superposés, dans lequel les composants en bois (20, 21, 22, 23) du mât (3) ont un premier côté extérieur (36) et un deuxième côté extérieur (37), dans lequel les composants en bois (20, 21, 22, 23) ont des côtés frontaux (45, 46) sur lesquels ils sont reliés entre eux, dans lequel les composants en bois (20, 21, 22, 23) présentent sur chacun de leurs côtés frontaux (45, 46) une structure à denture (24) qui comprend plusieurs éléments de denture (25, 27) juxtaposés dans la direction longitudinale (38) du côté frontal (45, 46), dans lequel les éléments de denture (25, 27) des deux composants en bois (20, 21, 22, 23) s'interpénètrent et délimitent un interstice (34), formé entre les composants en bois (20, 21, 22, 23), qui est au moins partiellement rempli de colle, **caractérisé en ce que** les composants en bois (20, 21, 22, 23) ont sur chacun de leurs côtés frontaux (45, 46) au moins une rainure longitudinale (47, 48, 49, 50) qui s'étend entre les côtés extérieurs (36, 37) des composants en bois (20, 21, 22, 23) du mât (3), dans lequel les rainures longitudinales (47, 48, 49, 50) des deux composants en bois (20, 21, 22, 23) forment au moins un conduit (51, 52) qui s'étend à travers plusieurs éléments de denture (25, 27) s'interpénétrant et qui s'étend sur au moins 80 % de la hauteur (h) des éléments de denture (25, 27).

2. Mât selon la revendication 1,
**caractérisé en ce que** le conduit (51, 52) s'étend au moins sur toute la hauteur (h) des éléments de denture (25, 27).

3. Mât selon la revendication 1 ou 2,
**caractérisé en ce que** le conduit (51, 52) s'étend à travers au moins deux, en particulier au moins cinq éléments de denture (25, 27) de chaque composant en bois (20, 21, 22, 23).

4. Mât selon l'une des revendications 1 à 3,
**caractérisé en ce que** la longueur (1) du conduit (51, 52) est de 10 cm à 150 cm, en particulier de 50 cm à 100 cm, et **en ce que** la largeur (m) du conduit (51, 52) est de 2 mm à 15 mm, en particulier de 3 mm à 10 mm.

5. Mât selon l'une des revendications 1 à 4,
**caractérisé en ce que** le mât (3) a au moins un conduit d'amenée (53) pour amener de la colle dans l'interstice (34), qui s'ouvre sur un côté extérieur (37) d'un composant en bois (20, 21, 22, 23).

6. Mât selon la revendication 5,
**caractérisé en ce que** le conduit d'amenée (53) dans le mât (3) s'étend du côté extérieur (36, 37) jusqu'à l'interstice (34) au moins partiellement en biais vers le haut.

7. Mât selon l'une des revendications 1 à 6,
**caractérisé en ce que** le mât (3) a au moins un conduit d'aération (54) qui relie l'interstice (34) à un côté extérieur (36, 37) des composants en bois (20, 21, 22, 23).

8. Mât selon la revendication 7,
**caractérisé en ce que** le conduit d'aération (54) s'étend de l'interstice (34) jusqu'au côté extérieur (36, 37) au moins partiellement en biais vers le haut.

9. Mât selon l'une des revendications 1 à 8,
**caractérisé en ce que** les composants en bois (20, 21, 22, 23) d'un segment sont reliés entre eux respectivement sur un joint angulaire (19).

10. Mât selon la revendication 9,
**caractérisé en ce que** les composants en bois (20, 21, 22, 23) présentent, sur au moins un côté frontal (55) s'étendant verticalement et formant le joint angulaire (19), au moins une fente (56, 57) dans laquelle est disposé un élément chauffant (59).

11. Mât selon la revendication 10,
**caractérisé en ce que** la fente (56, 57) est fermée en direction du côté frontal (55), en particulier par un bandeau en bois (58).

12. Mât selon l'une des revendications 9 à 11,
**caractérisé en ce que** les composants en bois (20, 21, 22, 23) sont doublés sur le joint angulaire (19), en particulier sur les deux côtés extérieurs (36, 37).

13. Mât selon l'une des revendications 1 à 12,
**caractérisé en ce qu'**au moins un composant en bois (20, 21, 22, 23) a au moins un élément chauffant (59) qui est disposé dans une fente (56, 57) s'étendant sur le côté frontal (55) dans la direction longitudinale du côté frontal (55).

14. Mât selon la revendication 13,
**caractérisé en ce que** le composant en bois (20, 21, 22, 23) a des couches longitudinales (39, 40, 41) et au moins une couche transversale (43) avec une direction de fibres s'étendant transversalement par rapport à la couche longitudinale (39, 40, 41), et **en ce que** la fente (56, 57) est disposée dans la couche transversale (43).

15. Mât selon la revendication 13 ou 14,
**caractérisé en ce qu'**il est prévu au moins deux éléments chauffants (59) qui sont disposés dans des fentes (56, 57) voisines l'une de l'autre, dans lequel l'écartement (p) des fentes (56, 57) mesuré perpendiculairement au côté extérieur (36, 37) correspond à au moins 0,2 fois l'épaisseur (c, d) du composant en bois (20, 21, 22, 23).
